# EUROPÄISCHE PATENTSCHRIFT

(11) **EP 2 078 167 B1**
(45) Veröffentlichungstag und Bekanntmachung des Hinweises auf die Patenterteilung: **14.12.2016**
(21) Anmeldenummer: 07818543.6
(22) Anmeldetag: 28.09.2007
(51) Int. Cl.: F16F 9/20

(54) **DÄMPFUNGSVORRICHTUNG MIT EINSTELLBAR VERÄNDERLICHER DÄMPFUNGSCHARAKTERISTIK ZUR DÄMPFUNG VON BEWEGLICHEN MÖBELTEILEN**
DAMPING DEVICE WITH ADJUSTABLE VARIABLE DAMPING CHARACTERISTICS FOR THE DAMPING OF MOVABLE FURNITURE PARTS
DISPOSITIF D'AMORTISSEMENT AYANT UNE CARACTÉRISTIQUE D'AMORTISSEMENT POUVANT ÊTRE MODIFIÉE DE MANIÈRE RÉGLABLE POUR L'AMORTISSEMENT D'ÉLÉMENTS MOBILES DE MEUBLES

(30) Priorität: 12.10.2006 DE 202006015656 U; 03.02.2007 DE 202007001571 U
(43) Veröffentlichungstag der Anmeldung: 15.07.2009
(73) Patentinhaber: Grass GmbH & Co. KG, 64354 Reinheim (DE)
(72) Erfinder: SCHNEIDER, Gabriele, 64407 Fränkisch-Crumbach (DE); HERPER, Markus, 64367 Mühltal (DE)
(74) Vertreter: Otten, Roth, Dobler & Partner mbB Patentanwälte
(86) Internationale Anmeldenummer: PCT/EP2007/008461
(87) Internationale Veröffentlichungsnummer: WO 2008/043441

(56) Entgegenhaltungen:
- DE-B- 1 094 534
- DE-C1- 4 237 156
- FR-A- 2 109 898
- US-A- 5 558 190

## Beschreibung

Die Erfindung betrifft eine Dämpfungsvorrichtung, insbesondere zur Dämpfung der Bewegung von beweglichen Möbelteilen von Möbelstücken, mit einem in einem Gehäuse längsverschieblich gelagerten Kolben, welcher in Abhängigkeit von seiner Verschiebungsstellung auf gegenüberliegenden Seiten zwei größenveränderliche, mit einem fluiden Dämpfungsmedium gefüllte Arbeitsräume bildet, welche über wenigstens eine Überström-Verbindung einen gedrosselten Übertritt des Dämpfungsmediums zwischen den beiden Arbeitsräumen ermöglicht, wobei auf einer Seite des Kolbens eine aus dem zugeordneten stirnseitigen Ende des Gehäuses abgedichtet herausgeführte Kolbenstange angeschlossen ist, über deren kolbenabgewandtes äußeres Ende die Bewegung des zu dämpfenden Möbelteils auf den Kolben übertragen wird.

Derartige Dämpfungs- oder auch Bremsvorrichtungen dienen im Möbelbau beispielsweise dazu, die beim schnellen schwungvollen Schließen von Türen bzw. Schließen von Schubladen von Schränken bei der stoßartigen Abbremsung des am Korpus anschlagenden beweglichen Möbelteils entstehenden Beanspruchungen und Geräusche zu vermeiden oder doch weitgehend zu verringern. Mit viskosen Flüssigkeiten, wie z. B. Silikonöl, als Dämpfungsmedium arbeitende Dämpfungsvorrichtungen (z. B. DE 10300732 A1) haben gegenüber mit gasförmigen Dämpfungsmedium arbeitenden Vorrichtungen den Vorteil, dass diese flüssigen Dämpfungsmedien praktisch inkompressibel sind, so dass sie keine Rückfederungseigenschaften aufweisen, welche den beweglichen Möbelteil nach Erreichen der Schließstellung wieder etwas aus der eigentlichen Schließstellung zurückzubewegen sucht. Bei der Verwendung solcher Dämpfer tritt das Problem auf, dass die zur Dämpfung des beweglichen Möbelteils zu erzeugenden Dämpfungskräfte auch von der Masse des jeweiligen Möbelteils und dessen Schließgeschwindigkeit abhängen, so dass für unterschiedliche Dämpfungsaufgaben der geforderten Dämpfungscharakteristik entsprechend angepasste unterschiedliche Dämpfer erforderlich sind.

Dokument DE1 094 534 B1 offenbart einen regelbaren Dämpfer mit einem Einstellschaft gemäß dem Oberbegriff des Anspruchs 1.

Der Erfindung liegt demgegenüber die Aufgabe zugrunde, eine Dämpfungsvorrichtung für Möbelteile zu schaffen, welche ohne Umbau oder Austausch einzelner Teile auf unterschiedliche Dämpfungscharakteristiken einstellbar ist. Dabei sollen die Abmessungen des Gehäuses der Dämpfungsvorrichtung im Vergleich zu aus dem Stand der Technik bekannten Dämpfungsvorrichtungen zumindest nicht vergrößert, vorzugsweise aber noch verringert werden. Ausgehend von einer Vorrichtung der eingangs erwähnten Art wird diese Aufgabe erfindungsgemäß dadurch gelöst, dass auf der dem kolbenstangenseitigen Arbeitsraum gegenüberliegenden Seite des Kolbens ein langgestreckter Einstellschaft mit einem dem Durchmesser der Kolbenstange im wesentlichen entsprechenden Durchmesser angeschlossen ist, dessen freies Ende ebenfalls abgedichtet aus der der dem kolbenstangenseitig geschlossenen Stirnseite gegenüberliegenden Stirnseite aus dem Gehäuse heraus geführt ist, und dass das am Kolben angeschlossene Ende des Einstellschafts in einen die beiden Arbeitsräume verbindenden Durchlasskanal des Kolbens eingreift und so ausgebildet ist, dass es durch Verstellbewegungen des Schafts relativ zum Kolben ein größenveränderlichen Drosselquerschnitt im Durchlasskanal bildet, und dass der Einstellschaft und der mit ihm fluchtende Durchlasskanal im Kolben seitlich versetzt und paralell zur Gehäuse-Längsmittelachse angeordnet sind. Durch die Bemessung des Durchmessers des Einstellschafts in gleicher Größe wie der Durchmesser der Kolbenstange bleibt das Gesamtvolumen der beiden Arbeitsräume bei der Verschiebung des Kolbens im Gehäuse gleich, so dass eine zwangläufig die äußeren Abmessungen des Dämpfergehäuses vergrößernde Volumenausgleichsvorrichtung zur Aufnahme bzw. Rückspeisung der Differenz des bei der Verschiebung des Kolbens aus den Arbeitsräumen verdrängten bzw. zuströmenden flüssigen Dämpfungsmediums nicht erforderlich ist. Insoweit entspricht die erfindungsgemäße Dämpfungsvorrichtung funktionell Dämpfungsvorrichtungen mit durchgehender, d. h. beidseitig abgedichtet aus den Stirnflächen des Gehäuses herausgeführte Kolbenstange arbeitenden Kolben-/Zylinder-Dämpfern. Zusätzlich wird durch die Anordnung des Einstellschafts im kolbenstangenabgewandten Arbeitsraum als Betätigungsschaft für eine Drosseleinrichtung die angestrebte Veränderung der Dämpfungscharakteristik der Dämpfungsvorrichtung von außen, d. h. ohne Öffnen des Gehäuses ermöglicht.

In bevorzugter Weiterbildung der Erfindung ist die Ausgestaltung dabei so getroffen, dass im kolbenseitigen Endbereich des Einstellschafts ein im Durchmesser gegenüber dem Schaftdurchmesser vergrößerter Gewindeabschnitt vorgesehen ist, welcher in einen mit einem komplementären Gegengewinde versehenen Abschnitt des Durchlasskanals eingreift, wobei dann im Gewindeabschnitt des Einstellschafts wenigstens eine einen Durchlass vom Arbeitsraum in den Durchlasskanal bildende nutartige Vertiefung vorgesehen ist, welche einen Teil des die beiden Arbeitsräume verbindenden Drosselkanals bildet. Von der arbeitsraumabgewandten Stirnfläche des Gewindeabschnitts des Einstellschafts tritt dann mit Vorteil ein sich in Richtung auf sein freies Ende konisch verjüngender Zapfen in einen gegenüber dem Gewindeabschnitt im Durchmesser verkleinerten Abschnitt des Durchlasskanals vor. Durch Veränderung der Einschraubtiefe des Gewindeabschnitts des Einstellschafts im komplementären Gegengewinde des Durchlasskanals kann dann der Drosselquerschnitt stufenlos vergrößert bzw. verkleinert werden, wodurch eine stufenlose Veränderung der Dämpfungscharakteristik der Dämpfungsvorrichtung möglich ist.

Am äußeren freien Ende des Einstellschafts ist dabei zweckmäßig eine Handhabe vorgesehen, die beispielsweise als im Durchmesser gegenüber dem Schaftdurchmesser des Einstellschafts vergrößerter Drehknopf ausgebildet ist, dessen Umfangsfläche zweckmäßig mit Riefen oder Rändelungen versehen ist.

Die Längsmittelachse der Kolbenstange ist in bevorzugter Ausgestaltung des Erfinders - in an sich bekannter Weise - fluchtend zur Längsmittelachse des Gehäuses ausgerichtet.

Dabei empfiehlt es sich, das Gehäuse und den im Gehäuseinnern längsverschieblich angeordneten Kolben - abweichend von einem kreisförmigen Quer

### (Weiter auf Seite 4 der urspr.Beschreibung)

schnitt - so auszubilden, dass sie eine ovalen oder von zwei parallelen geradlinigen, an ihren Enden durch Kreisbögen geschlossene Begrenzung gebildeten Querschnitt aufweisen. Durch diese sozusagen "zusammengedrückte" Querschnittsform des Gehäuses der Dämpfungsvorrichtung ist es möglich, die Dämpfungsvorrichtung auch in solchen Bereichen eines Möbelstücks anzuordnen, in welchen zwischen den relativ zueinander bewegten Möbelteilen nur ein geringer Abstand herrscht. Als Beispiel sei hier auf den Abstand zwischen der Außenseite einer Schubladenseitenwand und der zugeordneten Innenfläche des Korpus des Schubladenschranks hingewiesen.

In vorteilhafter Weiterbildung der Erfindung kann die Ausgestaltung so getroffen sein, dass in einem zu dem den Einstellschaft aufnehmenden Bereich des Durchlasskanals in Bezug auf die Längsmittelachse des Gehäuses versetzten, vorzugsweise diametral gegenüberliegenden Bereich des Kolbens ein zweiter, die beiden Arbeitsräume verbindender Durchlasskanal vorgesehen ist, über welchem Dämpfungsmedium zwischen den Arbeitsräumen überströmen kann.

Im zweiten Durchlasskanal ist dann mit Vorteil ein im Kolben um einen vorgegebenen Hub längsverschieblich gehalterter Schaft angeordnet, dessen Querschnittsfläche zumindest in einem Teilbereich zur Bildung eines Überströmdurchlasses zwischen den Arbeitsräumen kleiner als die lichte Querschnittsfläche des zweiten Durchlasskanals bemessen ist.

Zur Voreinstellung unterschiedlicher Dämpfungscharakteristiken bei entgegengesetzten Hubbewegungen des Kolbens kann es dann zweckmäßig sein. An einem der freien Enden des im zweiten Durchlass gehalterten Schafts kann dann eine im Querschnitt zumindest bereichsweise größer als der Querschnitt des zweiten Durchlasses bemessene Ventilscheibe vorgesehen sein, die im Falle eines im anschließenden Arbeitsraum gegenüber dem am freien Ende des gegenüberliegenden zweiten Arbeitsraums erhöhten Drucks an die zugewandte Stirnfläche des Kolbens angedrückt wird und den Überströmdurchlass zumindest teilweise verschließt und dann ein Überströmen von Dämpfungsmedium zwischen den Arbeitsräumen verhindert und funktionell als Rückschlagventil wirkt.

Das in dem mit der Ventilscheibe versehenen gegenüberliegende Ende des Schafts kann an seinem dem mit der Ventilscheibe versehenen Ende gegenüberliegenden Ende von einem Stift durchsetzt sein, dessen vom Schaft vortretende gegenüberliegende freie Enden in Schaftslängsrichtung verlaufende langlochartige Schlitze im Kolben eingreifen. Im Rahmen des von der Ventilscheibe einerseits und einem Ende der langlochartigen Schlitze andererseits vorgegebenen Hubes ist der im zweiten Durchlass gehalterte Schaft also längsverschieblich, jedoch unverlierbar im Kolben gehaltert.

Wenn die erfindungsgemäße Dämpfungsvorrichtung die höhere Dämpfungswirkung bei Einschieben der Kolbenstange ins Gehäuse erzeugen soll, wird die Ausgestaltung dann so getroffen, dass die Ventilscheibe an dem in den vom Einstellschaft durchsetzenden Arbeitsraum weisenden freien Ende des im zweiten Durchlass gehalterten Schafts vorgesehen ist. Der sich beim Einschieben der Kolbenstange im zweiten Arbeitsraum erhöhende Druck im Dämpfungsmedium drückt dann zwangsläufig die Ventilscheibe an die zugewandte Stirnfläche des Kolbens an, wodurch der zwischen dem Schaft und dem Durchlasskanal gebildete Überströmquerschnitt - abhängig von der Ausgestaltung der Ventilscheibe - teilweise oder vollständig verschlossen wird.

Bei einem bezüglich seiner äußeren Abmessungen in vorteilhafter Weise optimierten weiteren Ausführungsbeispiel der Erfindung kann die Ausgestaltung so getroffen sein, dass die Kolbenstange bezüglich ihrer Längsmittelachse seitlich zur Längsmittelachse des Einstellschafts versetzt so in einer Durchgangsöffnung im Kolben gehalten ist, dass ihr gehäuseinneres freies Ende noch über den anschließenden seitlichen Bereich der Kolbenstirnfläche in den zugeordneten Arbeitsraum vortritt, dass in dem von der Kolbenstange durchsetzten Bereich der Durchgangsöffnung im Kolben ein Überströmdurchlass ausgebildet ist, und dass auf dem in den zugehörigen Arbeitsraum vortretenden Ende der Kolbenstange eine Ventilscheibe zwischen einer auf der Kolbenstirnfläche aufliegenden, den Überströmdurchlass verschließenden in einer von der Kolbenstirnfläche abgehobene, den Überströmdurchlass mit dem anschließenden Arbeitsraum verbindende Position verschieblich gehaltert ist. Die Rückschlagfunktion des beim ersten Ausführungsbeispiel in einem zweiten Durchlass angeordneten Schaft mit einer Ventilscheibe wird in diesem Fall also unmittelbar im Bereich des gehäuseinneren'Endes der Kolbenstange verwirklicht, so dass der für den zweiten Durchlass erforderliche, den Kolben zwangsläufig in seinen Abmessungen vergrößernde Raum entfällt.

Dabei ist die Ausgestaltung zweckmäßig so getroffen, dass die Durchgangsöffnung im Kolben einen im Wesentlichen dem Durchmesser der Kolbenstange entsprechende kreisförmigen Querschnitt aufweist, der in einem Teilbereich mit einer radialen Durchmessererweiterung versehen ist, welche in der Durchgangsöffnung eine den Überströmdurchlass bildende durchgehende Nut erzeugt.

In Abwandlung der vorbeschriebenen Ausgestaltung der Dämpfungsvorrichtung kann der Einstellschaft verdrehbar und um einen vorgegebenen Hub längsverschieblich in dem die Arbeitsräume verbindenden Durchlasskanal des Kolbens angeordnet und federnd in eine Endposition vorgespannt gehalten sein, in welcher ein im einstellschaftseitigen Arbeitsraum radial von der Umfangsfläche des Einstellschafts vorspringender Drosselbund an der Kolbenstirnfläche anliegt, wobei dann der Drosselbund mit einer Anzahl von in Umfangsrichtung zueinander versetzten Aussparungen mit unterschiedlichem Durchlassquerschnitt versehen ist, welche durch Verdrehung des Einstellschafts im Durchlasskanal mit einem im Kolben vorgesehenen, die Arbeitsräume verbindenden Überströmdurchlass ausrichtbar sind. Durch Verdrehung des Einstellschafts derart, dass Aussparung unterschiedlichen Durchlassquerschnitts mit dem Überströmdurchlass zur Ausrichtung kommen, kann dann die Drosselwirkung und somit die Dämpfungscharakteristik der Dämpfungsvorrichtung in einer der Anzahl der Aussparungen entsprechenden Anzahl von Stufen verändert werden.

Der Überströmdurchlass wird dabei bevorzugt von einer von dem im Übrigen mit komplementären Durchmesser zum Einstellschaft geformten, den Kolben durchsetzenden nutartigen Vertiefung in der Wandung des Durchlasskanals gebildet.

Die Aussparungen im Drosselbund werden vorzugsweise von in der Umfangsfläche des Drosselbunds offen mündenden Aussparungen unterschiedlicher radialer Erstreckung gebildet.

Die Fixierung einer gewählten Drosselstufe kann dadurch erfolgen, dass von der dem Drosselbund zugewandten Stirnfläche des Kolbens einen in der Breite den Aussparungen im Drosselbund entsprechender Vorsprung vortritt, welcher in der federnd in die Anlageposition des Drosselbunds an die Kolbenstirnfläche gedrängten Position in eine der Aussparungen eingreift und den Einstellschaft gegen Verdrehung verriegelt, wobei diese Verriegelungsposition durch Längsverschiebung des Einstellschafts entgegen der federnden Vorspannung aus der Eingriffsstellung des Vorsprungs mit der Aussparung herausstellbar und der Einstellschaft dann - in eine abweichende Drosselstellung - verdrehbar ist.

Das Überströmen des Dämpfungsmediums von dem vom Einstellschaft durchsetzten Arbeitsraum in den von der Kolbenstange durchsetzten Arbeitsraum kann auch dadurch ermöglicht werden, dass die Kolbenstange um einen vorgegebenen Hub längsverschieblich in einer Durchgangsöffnung im Kolben gehalten ist, dass in dem von der Kolbenstange durchsetzten Bereich der Durchgangsöffnung wenigstens ein Überströmdurchlass ausgebildet ist, und dass die Kolbenstange in dem von ihr durchsetzten Arbeitsraum mit einem ringscheibenförmigen Ventilbund versehen ist, welcher bei der Längsverschiebung der Kolbenstange im Rahmen des vorgegebenen Hubes zwischen einer auf der zugeordneten Kolbenstirnfläche aufliegenden und dabei den Überströmdurchlass verschließenden und einem von der Kolbenstirnfläche abgehobenen und den Überströmdurchlass freigebenden Position verstellbar ist. Der - bevorzugt integral an der Kolbenstange angeformte - Ventilbund ersetzt in dieser Ausgestaltung also die beim zweiten Ausführungsbeispiel der Dämpfungsvorrichtung vorgesehenen, auf dem im einstellschaftseitigen Arbeitsraum liegenden freien Ende der Kolbenstange längsverschieblich angeordnete Ventilscheibe.

Die Erfindung ist in der folgenden Beschreibung von drei Ausführungsbeispielen in Verbindung mit der Zeichnung näher erläutert, und zwar zeigt:
- Fig. 1: eine isometrische Ansicht eines ersten Ausführungsbeispiels einer erfindungsgemäßen Dämpfungsvorrichtung, in welcher die Kolbenstange ganz in das Gehäuse eingeschoben ist;
- Fig. 2: eine Seitenansicht der Dämpfungsvorrichtung gesehen Richtung des Pfeils 2 in Figur 1;
- Fig. 3: eine Ansicht der Dämpfungsvorrichtung gesehen Richtung des Pfeils 3 in Figur 2;
- Fig. 4: eine Schnittansicht gesehen Richtung der Pfeile 4-4 in Figur 3;
- Fig. 5: ein in der Darstellungsweise der Figur 1 entsprechende isometrische Darstellung der Dämpfungsvorrichtung in der ganz aus dem Gehäuse herausgezogenen Position der Kolbenstange;
- Fig. 6: eine Seitenansicht gesehen Richtung des Pfeils 6 in Figur 5;
- Fig. 7: eine Ansicht gesehen des Pfeils 7 in Fig. 6;
- Fig. 8: eine Schnittansicht gesehen Richtung der Pfeile 8-8 in Figur 7;
- Fig. 8a: eine Schnittansicht gesehen Richtung der Pfeile 8a-8a in Fig. 8;

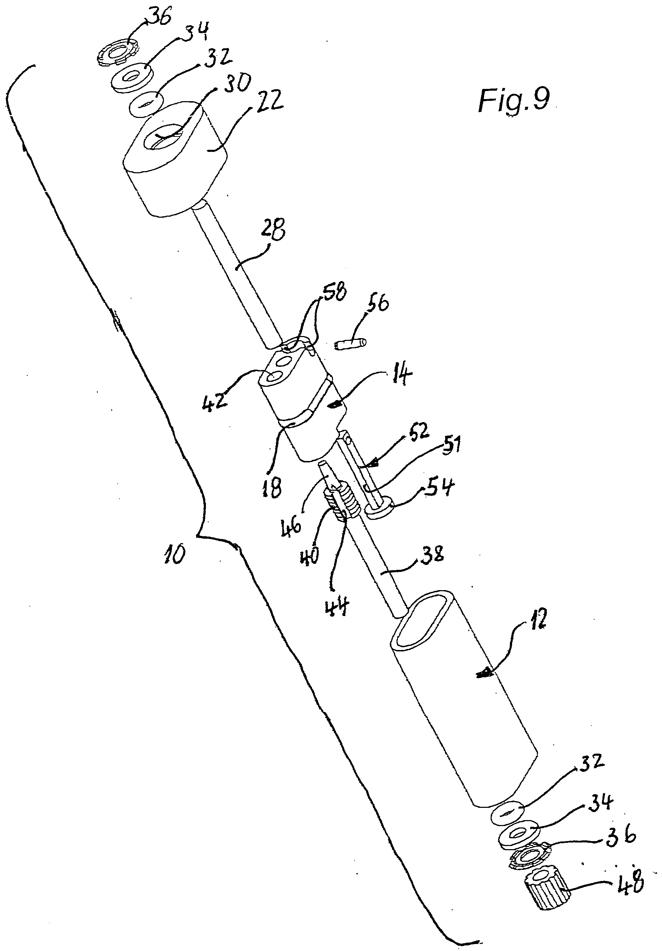

- Fig. 9: eine Explosionsdarstellung der erfindungsgemäßen Dämpfungsvorrichtung in isometrischer Darstellung ihrer Bauteile.
- Fig. 10: eine Seitenansicht eines zweiten Ausführungsbeispiels einer erfindungsgemäßen Dämpfungsvorrichtung;
- Fig. 11: eine Ansicht gesehen Richtung des Pfeils 11 in Fig. 10;
- Fig. 12: eine Schnittansicht gesehen Richtung der Pfeile 12-12 in Fig. 11;
- Fig. 12a: eine Schnittansicht gesehen Richtung der Pfeile 12a-12a in Fig. 12.
- Fig. 13: eine Seitenansicht einer den Kolbens, die Kolbenstange und den Einstellschaft umfassenden Baugruppe eines dritten Ausführungsbeispiels einer erfindungsgemäßen Dämpfungsvorrichtung;
- Fig. 14: eine Ansicht, gesehen in Richtung des Pfeils 14 in Fig. 13;
- Fig. 14a: eine Schnittansicht, gesehen in Richtung der Pfeile 14a-14a in Fig. 14 in vergrößertem Meßstab;
- Fig. 15: eine Schnittansicht, gesehen in Richtung der Pfeile 15-15 in Fig. 14;
- Fig. 16: eine isometrische Darstellung der in den Fig. 13 bis 15 gezeigten Baugruppe des dritten Ausführungsbeispiels;
- Fig. 17: eine Seitenansicht des Einstellschafts der in den Fig. 13 bis 16 gezeigten Baugruppe;
- Fig. 18: eine Ansicht des Einstellschafts, gesehen in Richtung des Pfeils 18 in Fig. 17;
- Fig. 19: eine in der Blickrichtung der Fig. 14 entsprechenden Ansicht des Kolbens der Baugruppe;
- Fig. 20: eine Ansicht auf die Unterseite des Kolbens, gesehen in Richtung des Pfeils 20 in Fig. 19;
- Fig. 21: eine Schnittansicht, gesehen in Richtung der Pfeile 21-21 in Fig. 19; und
- Fig. 22: eine isometrische Ansicht des in den Fig. 19 bis 21 gezeigten Kolbens in Blickrichtung schräg auf dessen Unterseite.

Das in den Zeichnungsfiguren 1 bis 8a dargestellte, in seiner Gesamtheit mit 10 bezeichnete erste Ausführungsbeispiel der erfindungsgemäßen Dämpfungsvorrichtung weist ein Gehäuse 12 auf, welches im speziell dargestellten Fall - abweichend von bekannten Dämpfungsvorrichtungen mit einem hohlzylindrischen und daher in der Regel auch kurz als zylinder" bezeichneten Gehäuse versehenen Dämpfungsvorrichtungen - einen von zwei von einander beabstandeten parallelen geradlinigen und an ihren Enden durch halbkreisförmige Begrenzungslinien verbundenen Begrenzungskanten gebildeten Querschnitt aufweist. Im hohlen Inneren dieses Gehäuses 12 ist dementsprechend ein Kolben 14 mit zum Gehäuseinnern komplementär geformtem Querschnitt verschieblich eingesetzt, welcher mit einem in eine umlaufende Nut 16 in der äußeren Kolbenwand eingesetzten Dichtungsring 18 den umlaufenden spaltförmigen Zwischenraum zwischen der Kolben-Außenfläche und der inneren Gehäusefläche abdichtet.

Das Gehäuse 12 ist an seinem in den Zeichnungsfiguren am unteren Ende durch eine integrale Stirnwand 20 und an seinem oberen Ende durch einen gesonderten, auf dem Gehäuse 12 befestigten Gehäusedeckel 22 geschlossen, wodurch im Gehäuseinneren auf gegenüberliegenden Seiten der Stirnflächen des Kolbens 14 jeweils ein Arbeitsraum 24 bzw. 26 entsteht, welche mit flüssigem Dämpfungsmedium gefüllt sind.

Eine abgedichtete durch den Gehäusedeckel 22 hindurchgeführte und an ihrem gehäuseinneren Ende starr mit dem Kolben 14 verbundene Kolbenstange 28 überträgt von dem zu dämpfenden beweglichen Möbelteil in ihr freies äußeres Ende eingeleitete Bewegungen auf den Kolben 14, welcher dadurch im Gehäuse 12 verschoben wird, wobei das Volumen der Arbeitsräume 24, 26 abhängig von der Bewegungsrichtung des Kolbens 14 jeweils vergrößert bzw. verkleinert wird. Entsprechend der Veränderung der Volumina der Arbeitsräume muss das im Gehäuse eingeschlossene Dämpfungsmedium von dem sich verkleinernden Arbeitsraum in den gegenüberliegenden sich vergrößernden Arbeitsraum übertreten können. Hierfür sind im Kolben 14 Durchlasskanäle gebildet, deren Ausgestaltung nachstehend noch näher erläutert wird.

Die Abdichtung der Kolbenstange 28 im Gehäusedeckel erfolgt durch einen in eine gestufte Durchgangsöffnung 30 im Gehäusedeckel 22 eingesetzte, im dargestellten Fall als O-Ring ausgebildeten Dichtungsring 32, welcher von einer Ringscheibe 34 gehalten wird. Eine sich mit ihren elastischen radial nach außen vorgespannten Zähnen in der Wandung des Durchlasses 30 verkrallende Zahnscheibe 36 fixiert die Scheibe 34 und somit den Dichtring 32 im Gehäusedeckel 22.

Der dem von der Kolbenstange 28 durchsetzten Arbeitsraum 26 gegenüberliegende Arbeitsraum 24 wird von einem seitlich zur mittig vom Kolben 14 vortretenden Kolbenstange 28 versetzt angeordneten Einstellschaft 38 durchsetzt, der seinerseits in gleicher Weise wie die Kolbenstange 28 durch einen gestuften Durchlass 30 in der Gehäuse-Stirnwand 20 hindurchgeführt ist. Auch in diesem Fall erfolgt die Abdichtung wiederum durch einen als O-Ring ausgebildeten Dichtring 32, der von einer Ringscheibe 34 und einer anschließenden Zahnscheibe 36 im Durchlass 30 gehalten wird und auf der Umfangsfläche des Einstellschafts 38 abdichtet. Am kolbenseitigen Ende ist der Einstellschaft 38 mit einem gegenüber dem Schaftdurchmesser etwas vergrößerten Gewindeabschnitt 40 versehen, der in einem mit einem komplementären Gegengewinde versehenen Abschnitt eines den Kolben 14 seitlich versetzt zur Kolbenstange 28 durchsetzenden Durchlasskanals 42 eingreift. Im Gewindeabschnitt 40 des Einstellschafts 38 ist eine langgestreckte nutartige Vertiefung 44 vorgesehen, welche einen Durchlass vom Arbeitsraum 24 zum Durchlasskanal 42 bildet. Vom korpusseitigen Ende des Gewindeabschnitts 38 tritt ein sich in Richtung auf sein freies Ende konisch verjüngender Zapfen 46 in einen gegenüber dem Gewindeabschnitt im Durchmesser verkleinerten Abschnitt des Durchlasskanals 42 vor. Durch Verdrehen des Einstellschafts 38 schraubt sich der Gewindeabschnitt 40 - je nach Verdrehrichtung - in den Durchlasskanal 42 hinein bzw. aus ihm heraus, wodurch der zwischen dem konischen Zapfen 46 und dem Durchlasskanal 42 gebildete Ringspalt verkleinert bzw. vergrößert wird. Dieser Ringspalt, durch den das aus einem Arbeitsraum 24, 26 in den jeweils anderen Arbeitsraum 26, 24 überströmende flüssige Druckmedium bei der Kolbenbewegung hindurchtreten muss, bildet einen Drosselspalt, welcher für die Größe der Kolbenbewegung entgegenwirkende Dämpfungs- bzw. Bremskraft ursächlich ist. Somit ist klar, dass durch Verdrehen des Einstellschaft 38 eine Veränderung des Durchlassquerschnitts des Drosselspalt und somit der Dämpfungscharakteristik der Dämpfungsvorrichtung möglich ist.

Zur Erleichterung einer feinfühligen Verdrehung des in seinem Durchmesser dem Durchmesser der Kolbenstange 28 entsprechend bemessenen Einstellschafts 38, ist an dessen äußerem freien Ende eine Handhabe 48 in Form eines auf seiner äußeren Umfangsfläche mit Riefen versehenen, im Durchmesser vergrößerten Drehknopfs befestigt.

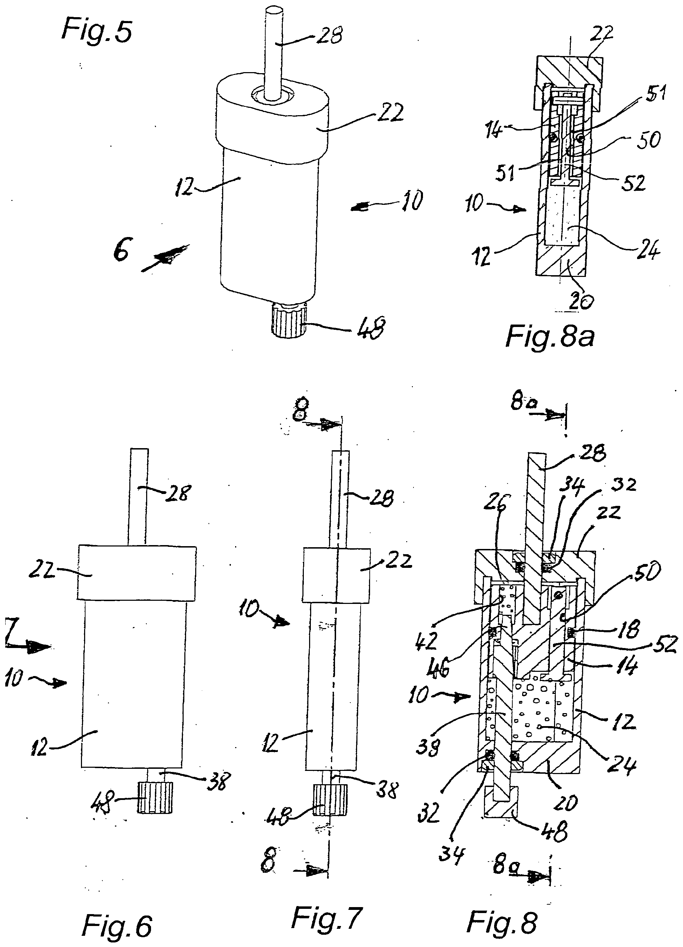

Im Kolben 14 ist in einem den Einstellschaft 38 aufnehmenden Bereich des Durchlasskanals 42 ein in Bezug auf die Gehäuse-Längsmittelachse diametral gegenüberliegenden Bereich des Kolbens 14 ein zweiter, die beiden Arbeitsräume verbindender Durchlasskanal 50 vorgesehen, in welchem ein langgestreckter Schaft 52 um einen vorgegebenen Hub längsverschieblich gehaltert angeordnet ist. Der zweite Durchlasskanal 50 und der Schaft 52 haben unterschiedliche Querschnittsabmessungen. Wie in Figur 8a erkennbar ist, ist der Schaft 52 zur Bildung eines Überströmdurchlasses zwischen den Arbeitsräumen 24, 26 in gegenüberliegenden Bereichen mit Anflächungen 51 versehen, über welche Dämpfungsmedium durchströmen kann.

Am unteren, dem Arbeitsraum 24 zugewandten Ende des Schafts 52 ist eine im Durchmesser größer als der Querschnitt des zweiten Durchlasskanals 50 bemessene Ventilscheibe 54 vorgesehen, welche bei einem im Arbeitsraum 24 herrschenden Überdruck an die Stirnfläche des Kolbens 14 angedrückt wird und dann den Überströmdurchlass zwischen dem zweiten Durchlasskanal 50 und dem Schaft 52 verschließt.

An dem, dem mit der Ventilscheibe versehenen Ende gegenüberliegenden Ende wird der Schaft 52 von einem Stift 56 durchsetzt, dessen beidseitig vom Schaft 52 vortretende Endbereiche in seitliche Schlitze 56 im Kolben 14 eingreifen. Es ist ersichtlich, dass der Schaft 52 durch die Ventilscheibe 54 einerseits und den Stift 56 andererseits unverlierbar im Kolben 14 gehalten sind, wobei die mögliche Längsverschiebung des Schafts 52 im Durchlasskanal 50 durch die Längserstreckung der Schlitze 58 vorgegeben ist.

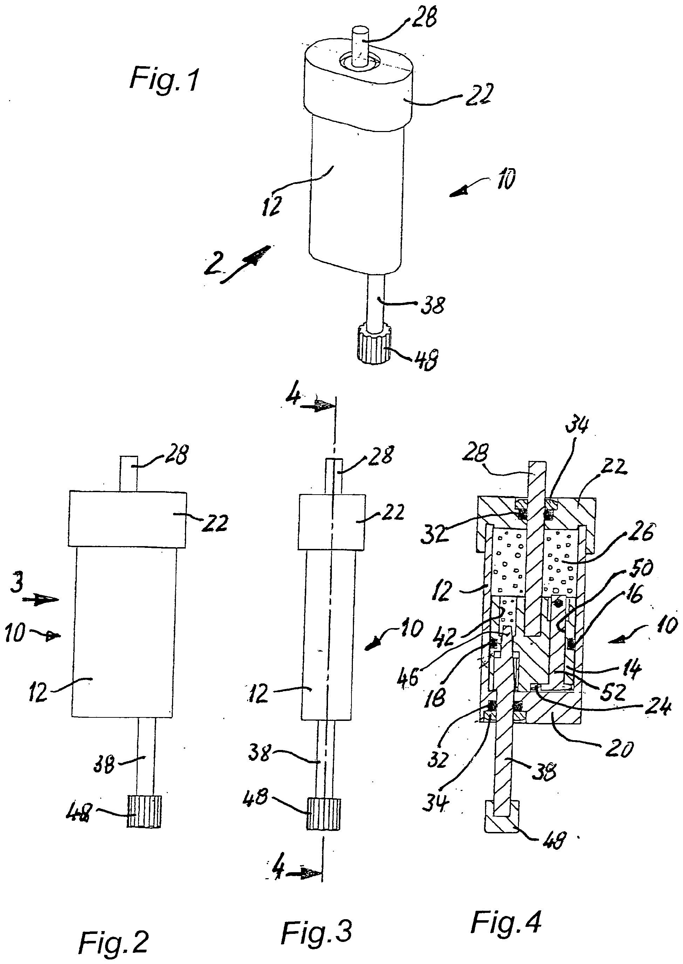

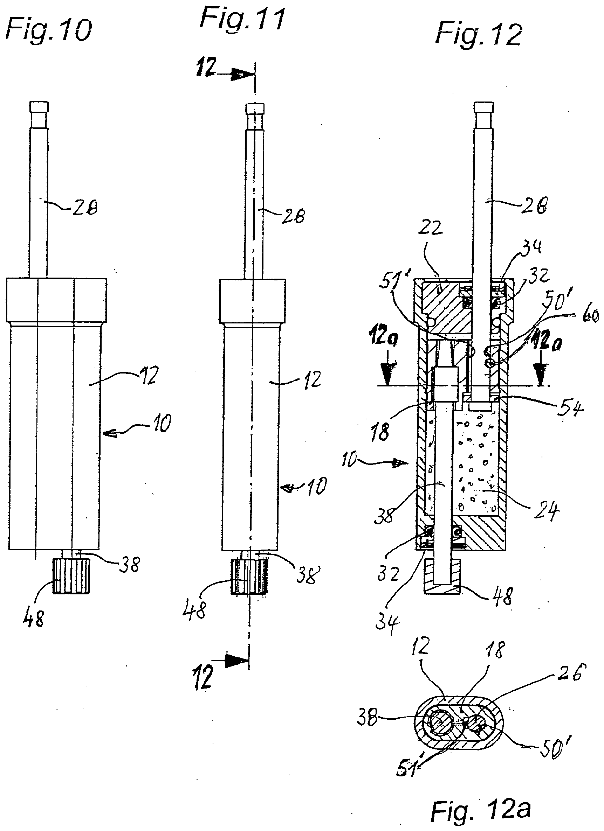

In den Figuren 10 - 12a ist ein gegenüber der vorstehend in Verbindung mit den Figuren 1 - 8 beschriebenen Ausführungsbeispiel in den äußeren Abmessungen noch weiter verringertes Ausführungsbeispiel einer erfindungsgemäßen Dämpfungsvorrichtung 10 gezeigt, welches im grundsätzlichen Aufbau und der Funktion mit dem vorstehend beschriebenen Ausführungsbeispiel weitgehend übereinstimmt. Zur Vermeidung unnötiger Wiederholungen werden daher nachstehend nur die getroffenen Abwandlungen beschrieben, während für die übereinstimmenden Ausgestaltungen beider Ausführungsbeispiele auf die vorausgehende Beschreibung verwiesen werden kann, zumal funktionell übereinstimmenden Bauteilen beider Ausführungsbeispiele in den zugehörigen Zeichnungen jeweils gleiche Bezugszeichen zugeordnet sind.

Der wesentliche Unterschied zum ersten Ausführungsbeispiel liegt darin, dass die dort durch den längsverschieblich im zweiten Durchlasskanal 50 angeordneten Schaft 52 mit an seinem freiem Ende vorgesehene Ventilscheibe 54 erzeugte winkung eines Rückschlagventils beim zweiten Ausführungsbeispiel sozusagen in Flucht mit der Längsmittelachse der Kolbenstange 28 verwirklicht ist. Zu diesem Zweck ist die das gehäuseseitige Ende der Kolbenstange 28 im Kolben 14 aufnehmende Befestigungsbohrung als den Kolben vollständig durchsetzende Durchgangsöffnung 50' ausgebildet. Die verlängerte Kolbenstange 28 durchsetzt die Durchgangsöffnung 50' vollständig und tritt noch etwas in den unteren Arbeitsraum 24 vor. Auf dem vorstehenden Ende der Kolbenstange 28 ist dann wieder eine als Ringscheibe ausgebildete Ventilscheibe 54 verschieblich angeordnet. Der Hub dieser Ventilscheibe 54 wird durch einen am freien Kolbenstangenende angestauchten, im Durchmesser vergrößerten Haltekopf begrenzt.

Die Kolbenstange 28 ist im Kolben 14 durch einen in eine die Durchgangsöffnung 50' tangential durchsetzende Querbohrung im Kolben 14 eingeführten Stift 60 fixiert, welcher im Bereich der Durchgangsöffnung 50' in eine entsprechende tangential verlaufende ausgerundete Ausnehmung in der Kolbenstange 28 eingreift. Der Überströmdurchlass, über welchen das Dämpfungsmedium bei von der unteren Kolbestirnfläche abgehobener Ventilscheibe 54 vom Arbeitsraum 26 in den Arbeitsraum 24 übertreten kann, wird dabei von einer in den Figuren 12 und 12a dargestellten Längsnut 51' in der im übrigen mit komplementärem Querschnitt zur Kolbenstange 28 geformten Wandung der Durchgangsöffnung 50' gebildet. Durch die Integration der für die Rückschlagfunktion ursächlichen Funktionsbauteile in die verlängerte Kolbenstange wird erreicht, dass der Kolben in Querrichtung eine verringerte Breite haben kann und so auch das Gehäuse 12 des Dämpfers eine entsprechend verringerte Breite hat.

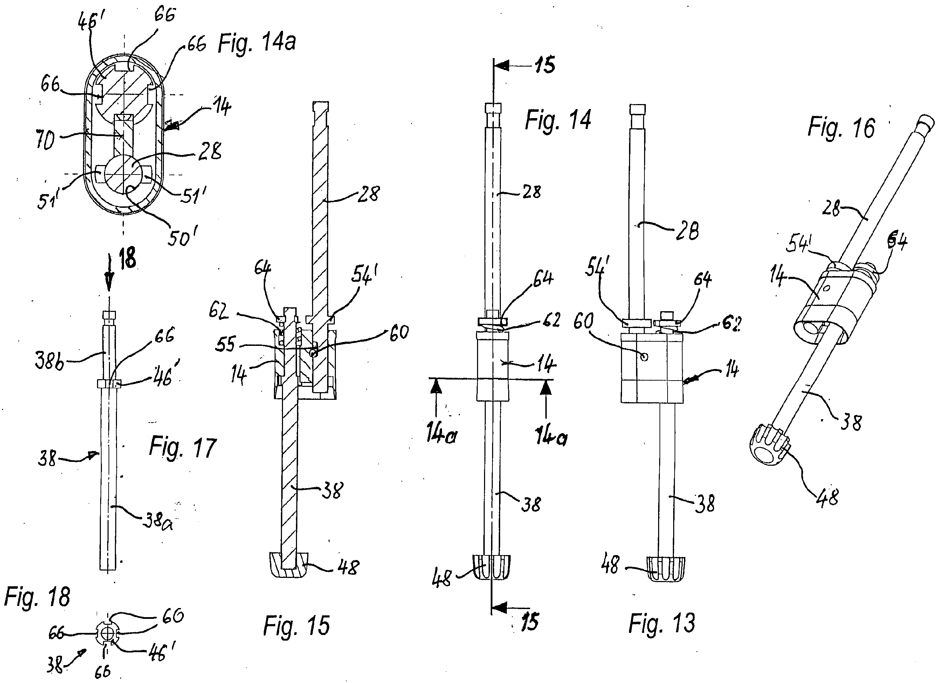

Ein drittes Ausführungsbeispiel, welches sich von dem zuvor beschriebenen zweiten Ausführungsbeispiel dadurch unterscheidet, dass die Veränderung der Dämpfungscharakteristik nicht stufenlos, sondern in vorgegebenen Stufensprüngen einstellbar ist, wird nachfolgend in Verbindung mit den Fig. 13 bis 22 beschrieben.

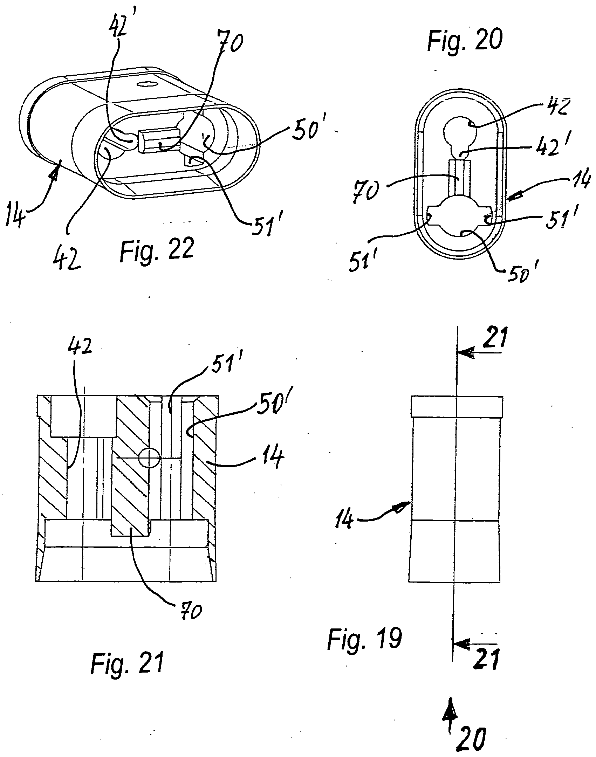

Da die getroffenen Abwandlungen ausschließlich die vom Kolben 14, der Kolbenstange 28 und dem Einstellschaft 38 gebildete Baugruppe betreffen, d.h. das Gehäuse gegenüber dem Gehäuse 12 des zweiten Ausführungsbeispiels unverändert ist, werden nachstehend nur die an der genannten Baugruppe getroffenen Änderungen beschrieben, wobei funktionell gleichen Bauteilen dieser Baugruppe auch die gleichen Bezugszeichen, wie bei den vorstehend beschriebenen Ausführungsbeispielen verwendet sind, so dass es genügt, im folgenden die getroffenen Abwandlungen zu beschreiben. Die genannte Baugruppe ist in den Fig. 13 bis 16 in unterschiedlichen Ansichten bzw. Schnitten dargestellt, während die Fig. 17 und 18 den Einstellschaft 38 und die Fig. 19 bis 22 den Kolben 14 jeweils gesondert in verschiedenen Ansichten bzw. Schnittdarstellungenen zeigen.

Der gegenüber dem den Arbeitsraum 24 durchsetzenden Abschnitt 38a im Durchmesser verringerten kolbenseitige Endabschnitt 38b des Einstellschafts 38 ist im Durchlass 42 des Kolbens 14 verdrehbar und um einen vorgegebenen Hub längsverschieblich gehaltert. Im Übergang vom Abschnitt 38a größeren Durchmessers zum Abschnitt 38b geringeren Durchmessers ist ein radial vorstehender Drosselbund 46' vorgesehen, welcher in der einen Endposition des Längshubs des Einstellschafts 38 an die dem Arbeitsraum 24 zugewandte versenkte Stirnfläche des Kolbens 14 anliegt. In dieser am Kolben anliegenden Position wird der Einstellschaft durch eine auf dem Boden einer in der gegenüberliegenden Kolben-Stirnfläche vorgesehenen Vertiefung abgestützte, unter Druckvorspannung vormontierte Schraubenfeder 62 gehalten, deren anderes Ende am kolbenabgewandten, im Arbeitsraum 26 liegenden freien Ende des Einstellschafts 38 an einer dort montierten Sicherungsscheibe 64 abgestützt ist.

Der Drosselbund 46' ist mit einer Anzahl von in Umfangsrichtung zueinander versetzten radialen Aussparungen 66 gleicher Breite jedoch unterschiedlicher radialer Erstreckung versehen, welche durch Verdrehung des Einstellschafts 38 wahlweise mit einem die Arbeitsräumen 24, 26 verbindenden Überströmdurchlass 42' ausrichtbar sind. Der Überströmdurchlass 42' wird dabei von einer in der Wandung des im Übrigen mit komplementärem Durchmesser zum Durchlasskanal 42 durchsetzenden Einstellschaft-Abschnitts 38b den Kolben 14 durchsetzenden nutartigen Vertiefung gebildet.

Von der dem Drosselbund 46' zugewandten vertieften Stirnfläche des Kolbens 14 tritt ein in der Breite den Aussparungen 66 im Drosselbund 46' entsprechender Vorsprung 70 vor, welcher in der federnd in die Anlageposition des Drosselbunds 46' an die Kolbenstirnfläche gedrängten Position in eine der Aussparungen 66 eingreift und den Einstellschaft 38 gegen Verdrehung verriegelt. Die in der Verriegelungsposition befindliche Aussparung 66 kann durch Längsverschiebung des Einstellschafts 38 entgegen der federnden Vorspannung der Schraubenfeder 62 aus der Eingriffsstellung mit der zugeordneten Aussparung herausgehoben werden, wobei der Einstellschaft dann im Durchlasskanal 42 verdrehbar und so eine andere, im Drosselbund 46' vorgesehene Aussparung 66 abweichenden Durchlassquerschnitts mit dem Überströmdurchlass 42' ausgerichtet werden kann.

Eine weitere Abwandlung gegenüber dem zweiten Ausführungsbeispiel besteht darin, dass die Kolbenstange 28 um einen vorgegebenen Hub längsverschieblich in der Durchgangsöffnung 50' im Kolben 14 gehalten ist. In dem von der Kobenstange 28 durchsetzten Bereich der Durchgangsöffnung 50' ist dabei wenigstens ein Überströmdurchlass 51' ausgebildet und die Kolbenstange ist in dem von ihr durchsetzten Arbeitsraum 26 mit einem ringscheibenförmigen Ventilbund 54' versehen, welcher bei der Längsverschiebung der Kolbenstange 28 im Rahmen des vorgegebenen Hubs zwischen einer auf der zugeordneten Kolben-Stirnfläche aufliegenden und dabei den Überströmdurchlass 51' verschließenden und einem von der Kolben-Stirnfläche abgehobenen und den Überströmdurchlass freigebenden Position verstellbar ist. Die längsverschiebliche Befestigung der Kolbenstange 28 im Kolben 14 erfolgt dabei wiederum mittels eines die Durchgangsöffnung 50' tangential durchsetzende Querbohrung im Kolben 14 eingeführten Stifts 60, welcher im Bereich der Durchgangsöffnung 50' in eine zugeordnete tangential verlaufende Ausnehmung 55 eingreift, deren Längserstreckung parallel zur Längsmittelachse der Kolbenstange 28 entsprechend dem vorgegebenen Hub bemessen ist.

Der Ventilbund 54' ist beim dargestellten Ausführungsbeispiel integral an der Kolbenstange 28 angeformt.

Es ist ersichtlich, dass im Rahmen des Erfindungsgedankens Abwandlungen und Weiterbildungen der beschriebenen Ausführungsbeispiele möglich sind. So ist z. B. ohne weiteres ersichtlich, dass die bei den beschriebenen Ausführungsbeispielen beim Eindrücken der Kolbenstange 28 in das Gehäuse 12 erzielte starke, durch Verdrehen des Einstellschafts 38 veränderbare Dämpfungswirkung auf eine Dämpfungswirkung in entgegengesetzter, d. h. beim Herausziehen der Kolbenstange 28 aus dem Gehäuse einsetzender Dämpfungswirkung umgestellt werden kann, wenn die Funktion des Rückschlagventils durch Anordnung einer Ventilscheibe auf der gegenüberliegenden, d. h. zum Arbeitsraum 26 weisende Oberseite des Kolbens ersetzt wird.

## Patentansprüche

1. Dämpfungsvorrichtung (10) zur Dämpfung der Bewegung von beweglichen Möbelteilen von Möbelstücken, mit einem in einem Gehäuse (12) längsverschieblich gelagerten Kolben (14), welcher in Abhängigkeit von seiner Verschiebungsstellung auf gegenüberliegenden Seiten zwei größenveränderliche, mit einem fluiden Dämpfungsmedium gefüllte Arbeitsräume (24; 26) bildet, welche über wenigstens eine Überström-Verbindung einen gedrosselten Übertritt des Dämpfungsmediums zwischen den beiden Arbeitsräumen (24; 26) ermöglicht, wobei auf einer Seite des Kolbens (14) eine aus dem zugeordneten stirnseitigen Ende des Gehäuses (12) abgedichtet herausgeführte Kolbenstange (28) angeschlossen ist, über deren kolbenabgewandtes äußeres Ende die Bewegung des zu dämpfenden Möbelteils auf den Kolben (14) übertragen wird, **dadurch gekennzeichnet,**
**dass** auf der dem kolbenstangenseitigen Arbeitsraum (26) gegenüberliegenden Seite des Kolbens (14) ein langgestreckter Einstellschaft (38) mit einem dem Durchmesser der Kolbenstange (28) im Wesentlichen entsprechenden Durchmesser angeschlossen ist, dessen freies Ende ebenfalls abgedichtet aus der der dem kolbenstangenseitig geschlossenen Stirnseite gegenüberliegenden Stirnseite aus dem Gehäuse (12) herausgeführt ist,
**dass** das am Kolben (14) angeschlossen Ende des Einstellschafts (38) in einen die beiden Arbeitsräume (24; 26) verbindenden Durchlasskanal (42) des Kolbens (14) eingreift und so ausgebildet ist, dass es durch Verstellbewegung des Schafts (38) relativ zum Kolben (14) einen größenveränderlichen Drosselquerschnitt im Durchlasskanal (42) bildet, und
**dass** der Einstellschafts (38) und der mit ihm fluchtende Durchlasskanal (42) im Kolben (14) seitlich versetzt und parallel zur Gehäuse-Längsmittelachse angeordnet sind.

2. Dämpfungsvorrichtung nach Anspruch 1, **dadurch gekennzeichnet, dass** im kolbenseitigen Endbereich des Einstellschafts (38) ein im Durchmesser gegenüber dem Schaftdurchmesser vergrößerter Gewindeabschnitt (40) vorgesehen ist, der in einen mit einem komplementären Gegengewinde versehenen Abschnitt des Durchlasskanals (42) eingreift und dass im Gewindeabschnitt (40) des Einstellschafts (38) wenigstens eine einen Durchlass vom Arbeitsraum (24) in den Durchlasskanal (42) bildende nutartige Vertiefung (44) vorgesehen ist.

3. Dämpfungsvorrichtung nach Anspruch 2, **dadurch gekennzeichnet, dass** von der arbeitsraumabgewandten Stirnfläche des Gewindeabschnitts (40) des Einstellschafts (38) ein sich in Richtung auf sein freies Ende konisch verjüngender Zapfen (46) in einen gegenüber dem Gewindeabschnitt (40) im Durchmesser verkleinerten Abschnitt des Durchlasskanals (42) vortritt.

4. Dämpfungsvorrichtung nach einem der Ansprüche 1 bis 3 **dadurch gekennzeichnet, dass** am freien Ende des Einstellschafts (38) eine Handhabe (48) vorgesehen ist.

5. Dämpfungsvorrichtung nach Anspruch 4, **dadurch gekennzeichnet, dass** die Handhabe (48) als in seiner Umfangsfläche mit Riefen oder Rändelungen versehener im Durchmesser vergrößerter Drehknopf ausgebildet ist.

6. Dämpfungsvorrichtung nach einem der Ansprüche 1 bis 5, **dadurch gekennzeichnet, dass** die Längsmittelachse der Kolbenstange (28) fluchtend zur Längsmittelachse des Gehäuses (12) ausgerichtet ist.

7. Dämpfungsvorrichtung nach einem der Ansprüche 1 bis 6, **dadurch gekennzeichnet, dass** das Gehäuse (12) und der im Gehäuseinnern längsverschieblich angeordnete Kolben (14) einen von der Kreisquerschnittsform abweisenden ovalen oder von zwei parallelen geradlinigen, an ihren Enden durch Kreisbögen geschlossenen Begrenzungen gebildeten Querschnitt aufweisen.

8. Dämpfungsvorrichtung nach Anspruch 6 oder 7, **dadurch gekennzeichnet, dass** in einem dem den Einstellschaft (38) aufnehmenden Bereich des Durchlasskanals (42) in Bezug auf die Längsmittelachse des Gehäuses (12) versetzten, vorzugsweise diametral gegenüberliegenden Bereich des Kolbens (14) ein zweiter, die beiden Arbeitsräume (24; 26) verbindender Durchlasskanal (50) vorgesehen ist.

9. Dämpfungsvorrichtung nach Anspruch 8, **dadurch gekennzeichnet, dass** im zweiten Durchlasskanal (50) ein im Kolben (14) um einen vorgegebenen Hub längsverschieblich gehalterter Schaft (52) angeordnet ist, dessen Querschnittsfläche zumindest in einem Teilbereich zur Bildung eines Überströmdurchlasses zwischen den Arbeitsräumen (24; 26) kleiner als die lichte Querschnittsfläche des zweiten Durchlasskanals (50) bemessen ist.

10. Dämpfungsvorrichtung nach Anspruch 9, **dadurch gekennzeichnet, dass** an einem der freien Enden des im zweiten Durchlasskanal (50) gehalterten Schafts (52) eine im Querschnitt zumindest bereichsweise größer als der Querschnitt des zweiten Durchlasskanals (50) bemessene Ventilscheibe (54) vorgesehen ist, welche im Falle eines im anschließenden Arbeitsraum (24) gegenüber dem am freien Ende des gegenüberliegenden zweiten Arbeitsraums (26) erhöhten Drucks an die zugewandte Stirnfläche des Kolbens (14) angedrückt wird und den Überströmdurchlass zwischen dem zweiten Durchlasskanal (50) und dem Schaft (52) zumindest teilweise verschließt.

11. Dämpfungsvorrichtung nach Anspruch 10, **dadurch gekennzeichnet, dass** das dem mit der Ventilscheibe (54) versehenen Ende gegenüberliegende Ende des Schafts (52) von einem Stift (56) durchsetzt wird, dessen vom Schaft vortretende gegenüberliegende freie Enden in in Schaftlängsrichtung verlaufende langlochartige Schlitze (56) im Kolben (14) eingreifen.

12. Dämpfungsvorrichtung nach Anspruch 10 oder 11, **dadurch gekennzeichnet, dass** die Ventilscheibe (54) an dem in den vom Einstellschaft (38) durchsetzenden Arbeitsraum (24) weisenden freien Ende des im zweiten Durchlasskanal (50) gehalterten Schafts (52) vorgesehen ist.

13. Dämpfungsvorrichtung nach einem der Ansprüche 1 bis 7, **dadurch gekennzeichnet, dass** die Kolbenstange (28) bezüglich ihrer Längsmittelachse seitlich zur Längsmittelachse des Einstellschafts (38) versetzt so in einer Durchgangsöffnung (50') im Kolben (14) gehalten ist, dass ihr gehäuseinneres freies Ende noch über den anschließenden seitlichen Bereich der Kolbenstirnfläche in den zugeordneten Arbeitsraum (24) vortritt, dass in dem von der Kolbenstange (28) durchsetzten Bereich der Durchgangsöffnung (50') im Kolben (14) ein Überströmdurchlass (51) ausgebildet ist, und dass auf dem in den zugehörigen Arbeitsraum (24) vortretenden Ende der Kolbenstange (28) eine Ventilscheibe (54) zwischen einer auf der Kolbenstirnfläche aufliegenden, den Überströmdurchlass(51) verschließenden in eine von der Kolbenstirnfläche abgehobene, den Überströmdurchlass mit dem anschließenden Arbeitsraum (24) verbindende Position verschieblich gehaltert ist.

14. Dämpfungsvorrichtung nach Anspruch 13, **dadurch gekennzeichnet, dass** die Durchgangsöffnung (50') im Kolben (14) einen im Wesentlichen dem Durchmesser der Kolbenstange (28) entsprechende kreisförmigen Querschnitt aufweist, der in einem Teilbereich eine eine durchgehende vertiefte, den Überströmdurchlass (51) bildenden Nut in der Durchgangsöffnung ausbildende radiale Durchmesservergrösserung aufweist.

15. Dämpfungsvorrichtung nach Anspruch 1, **dadurch gekennzeichnet, dass** die Kolbenstange (28) bezüglich ihrer Längsmittelachse seitlich zur Längsmittelachse des Einstellschafts (38) versetzt und um einen beschränkten Hub längsverschieblich in einer den Kolben (14) durchsetzenden Durchgangsöffnung (50') angeordnet und in der Durchgangsöffnung in dem von der Kolbenstange (28) durchsetzten Bereich wenigstens ein Überströmdurchlass (51') ausgebildet ist, und dass die Kolbenstange (28) im Bereich ihres Übertritts vom zugeordneten Arbeitsraum (26) in die Durchgangsöffnung (50') mit einem umlaufenden radial vorstehenden Ventilbund (54') versehen ist, welcher im Rahmen des Längshubs der Kolbenstange (28) zwischen einer auf der Kolbenstirnfläche aufliegenden und den wenigstens einen Überströmdurchlass verschließenden und einer von der Kolbenfläche abgehobenen, den wenigstens einen Überströmdurchlass (51) mit dem zweiten Arbeitsraum (24) verbindenden Position verschieblich ist.

16. Dämpfungsvorrichtung nach Anspruch 1 oder 15, **dadurch gekennzeichnet, dass** der Einstellschaft (38) verdrehbar und um einen vorgegebenen Hub längsverschieblich in dem die Arbeitsräume (24, 26) verbindenden Durchlasskanal (42) des Kolbens (14) angeordnet und federnd in eine Endposition vorgespannt gehalten ist, in welcher ein im einstellschaftseitigen Arbeitsraum (24) radial von der Umfangsfläche des Einstellschafts (38) vorspringender Drosselbund (46') an der Kolbenstirnfläche anliegt, und dass der Drosselbund mit einer Anzahl von in Umfangsrichtung zueinander versetzten Aussparungen (66) mit unterschiedlichem Durchlassquerschnitt versehen ist, welche durch Verdrehung des Einstellschafts (38) im Durchlasskanal (42) wahlweise mit einem im Kolben (14) vorgesehenen, die Arbeitsräume (24, 26) verbindenden Überströmdurchlass (42') ausrichtbar sind.

17. Dämpfungsvorrichtung nach Anspruch 18., **dadurch gekennzeichnet, dass** der Überströmdurchlass (42') von einer in der Wandung des im übrigen mit komplementärem Durchmesser zum Einstellschaft (38) bemessenen Durchlasskanals (42) vorgesehenen, den Kolben (14) durchsetzenden nutartigen Vertiefung gebildet wird.

18. Dämpfungsvorrichtung nach Anspruch 16. und 17., **dadurch gekennzeichnet, dass** die Aussparungen (66) im Drosselbund (46') in der Umfangsfläche des Drosselbunds offen münden und unterschiedliche radiale Erstreckung aufweisen.

19. Dämpfungsvorrichtung nach Anspruch 17. und 18., **dadurch gekennzeichnet, dass** von der dem Drosselbund (46') zugewandten Stirnfläche des Kolbens (14) ein in der Breite den Aussparungen (66) im Drosselbund entsprechender Vorsprung (70) vortritt, welcher in der federnd in die Anlageposition des Drosselbunds an die Kolbenstirnfläche gedrängten Position in eine der Aussparungen eingreift und den Einstellschaft gegen Verdrehung verriegelt, wobei die in der Verriegelungsposition befindliche Aussparung (66) durch Längsverschiebung des Einstellschafts (38) entgegen der federnden Vorspannung aus der Eingriffsstellung mit dem Vorsprung (70) mit der Aussparung herausstellbar und der Einstellschaft (38) dann im Durchlasskanal (42) verdrehbar ist.

20. Dämpfungsvorrichtung nach einem der Ansprüche 16 bis 19, **dadurch gekennzeichnet, dass** die Kolbenstange (28) um einen vorgegebenen Hub längsverschieblich in einer Durchgangsöffnung (50') im Kolben (14) gehalten ist, dass in dem von der Kolbenstange (28) durchsetzten Bereich der Durchgangsöffnung (50') wenigstens ein Überströmdurchlass (51') ausgebildet ist, und dass die Kolbenstange (28) in dem von ihr durchsetzten Arbeitsraum (26) mit einem ringscheibenförmigen Ventilbund (54') versehen ist, welcher bei der Längsverschiebung der Kolbenstange (28) im Rahmen des vorgegebenen Hubes zwischen einer auf der zugeordneten Kolbenstirnfläche aufliegenden und dabei den Überströmdurchlass (51') verschließenden und einem von der Kolbenstimfläche abgehobenen und den Überströmdurchlass (51') freigebenden Position verstellbar ist.

21. Dämpfungsvorrichtung nach Anspruch 20, **dadurch gekennzeichnet, dass** der Ventilbund (54') integraler Teil der Kolbenstange (28) ist.

## Claims

1. Damping device (10) for damping the movement of movable furniture parts of pieces of furniture, with a piston (14) which is mounted in a housing (12) so as to be longitudinally displaceable and which as a function of its displaced position forms on opposing sides two working chambers (24; 26) which are variable in size and are filled with a fluid damping medium, enabling by means of at least one overflow connection a throttled overflow of the damping medium between the two working chambers (24; 26), wherein a piston rod (28) which extends in a sealed manner out of the associated front end of the housing (12) is connected on one side of the piston (14) and the movement of the furniture part to be damped is transferred to the piston (14) by way of the outer end of the piston rod remote from the piston,
**characterised in that**
on the side of the piston (14) lying opposite the working chamber (26) on the piston rod side there is connected an elongated adjusting shaft (38) with a diameter substantially corresponding to the diameter of the piston rod (28), the free end of the adjusting shaft also extending out of the housing (12) out of the end face lying opposite the end face closed on the piston rod side,
**in that** the end of the adjusting shaft (38) connected to the piston (14) engages in a through channel (42) of the piston (14) connecting the two working chambers (24; 26) and is constructed in such a way that it forms a throttle cross-section which is variable in size in the through channel (42) due to adjusting movements of the shaft (38) relative to the piston (14),
**in that** the adjusting shaft (38) and the through channel (42) aligned therewith in the piston (14) are offset laterally and are disposed parallel to the longitudinal central axis of the housing.

2. Damping device according to claim 1, **characterised in that** in the end region of the adjusting shaft (38) on the piston side a threaded portion (40) is provided which is enlarged in diameter by comparison with the shaft diameter and engages in a portion of the through channel (42) provided with a complementary matching thread, wherein at least one groove-like recess (44) which forms a passage from the working chamber (24) into the through channel (42) is then provided in the threaded portion (40) of the adjusting shaft (38).

3. Damping device according to claim 2, **characterised in that** a lug (46) which tapers conically in the direction of its free end then projects from the end face of the threaded portion (40) of the adjusting shaft (38) remote from the working chamber into a portion of the through channel (42) which is reduced in diameter relative to the threaded portion (40).

4. Damping device according to any one of claims 1 to 3, **characterised in that** a handle (48) is provided on the free end of the adjusting shaft (38).

5. Damping device according to claim 4, **characterised in that** the handle (48) is constructed as a rotary knob of enlarged diameter which is provided on its circumferential surface with grooves or knurlings.

6. Damping device according to any one of claims 1 to 5, **characterised in that** the longitudinal central axis of the piston rod (28) is aligned with the longitudinal central axis of the housing (12).

7. Damping device according to any one of claims 1 to 6, **characterised in that** the housing (12) and the piston (14) disposed so as to be longitudinally displaceable have a cross-section which diverges from the circular cross-sectional shape and is oval or is formed by two parallel straight boundaries which are closed at their ends by circular arcs.

8. Damping device according to claim 6 or 7, **characterised in that** in a preferably diametrically opposed region of the piston (14) which is offset with respect to the region of the through channel (42) receiving the adjusting shaft (38) in relation to the longitudinal central axis of the housing (12), a second through channel (50) is provided which connects the two working chambers (24; 26).

9. Damping device according to claim 8, **characterised in that** a shaft (52) is retained in the second through channel (50) so as to be longitudinally movable by a predetermined stroke, wherein at least in a part-region the cross-sectional surface of the shaft is smaller than the clear cross-sectional surface of the second through channel (50) in order to form an overflow passage between the working chambers (24; 26).

10. Damping device according to claim 9, **characterised in that** on one of the free ends of the shaft (52) retained in the second through channel (50) a valve disc (54) is provided which has a larger cross-section at least in some areas than the cross-section of the second through channel (50) and which, in the case of a higher pressure in the adjoining working chamber (24) than at the free end of the opposing second working chamber (26), is pressed onto the facing end wall of the piston (14) and at least partially closes the overflow passage between the second through channel (50) and the shaft (52).

11. Damping device according to claim 10, **characterised in that** a pin (56), of which the opposing free ends projecting from the shaft engage in slot-like slits (56) in the piston (14) which extend in the longitudinal direction of the shaft, passes through the end of the shaft (52) lying opposite the end provided with the valve disc (54).

12. Damping device according to claim 10 or 11, **characterised in that** the valve disc (54) is provided on the free end of the shaft (52) which is retained in the second through channel (50) and is directed into the working chamber (24) through which the adjusting shaft (38) passes.

13. Damping device according to any one of claims 1 to 7, **characterised in that** the longitudinal central axis of the piston rod (28) offset laterally with respect to the longitudinal central axis of the adjusting shaft (38), the piston rod (28) is retained in a through opening (50') in the piston (14) in such a way that its free end within the housing still projects over the adjoining lateral region of the end face of the piston into the associated working chamber (24), that an overflow passage (51) is formed in the region of the through opening (50') in the piston (14) through which the piston rod (28) passes, and that on the end of the piston rod (28) projecting into the appertaining working chamber (24) a valve disc (54) is retained so as to be movable between a position in which it rests on the piston end face and closes the overflow passage (51) and a position in which it is lifted off from the piston end face and connects the overflow passage to the adjoining working chamber (24).

14. Damping device according to claim 13, **characterised in that** the through opening (50') in the piston (14) has a circular cross-section which substantially corresponds to the diameter of the piston rod (28) and is provided in a part-region with a radial expansion of the diameter which produces a through groove forming an overflow passage (51) in the through opening.

15. Damping device according to claim 1, **characterised in that** the longitudinal central axis of the piston rod (28) is offset laterally with respect to the longitudinal central axis of the adjusting shaft (38) and the piston rod (28) is arranged so as to be longitudinally movable by a limited stroke in a through opening (50') passing through the piston (14) and at least one overflow passage (51') is formed in the region of the through opening (50') through which the piston rod (28) passes, and **in that** the piston rod (28) is provided in the region where it passes from the associated working chamber (26) into the through opening (50') with a circumferential radially projecting valve collar (54') which in the context of the longitudinal travel of the piston rod (28) is movable between a position in which it rests on the piston end face and closes the overflow passage and a position in which it is lifted off from the piston end face and connects the at least one overflow passage (51) to the second working chamber (24).

16. Damping device according to claim 1 or 15, **characterised in that** the adjusting shaft (38) is disposed in the through channel (42) of the piston (14) connecting the working chambers (24, 26) so as to be rotatable and longitudinally movable by a predetermined stroke and is retained so as to be biased resiliently into an end position in which a throttle collar (46') which projects radially from the circumferential surface of the adjusting shaft (38) in the working chamber (24) on the adjusting shaft side rests on the piston end face, and that the throttle collar is provided with a plurality of cut-outs (66) which are offset with respect to one another in the circumferential direction with differing passage cross-sections and which can be selectively aligned, by rotation of the adjusting shaft (38) in the through channel (42), with an overflow passage (42') provided in the piston (14) and connecting the working chambers (24, 26).

17. Damping device according to claim 18, **characterised in that** the overflow passage (42') is formed by a groove-like recess in the wall of the through channel (42) which has a complementary diameter to the adjusting shaft (38) and passes through the piston (14).

18. Damping device according to claim 16 and 17, **characterised in that** the cut-outs (66) in the throttle collar (46') open in the circumferential surface of the throttle collar and have differing radial extensions.

19. Damping device according to claim 17 and 18, **characterised in that** a projection (70) which corresponds in width to the cut-outs (66) in the throttle collar (46') projects from the end face of the piston (14) facing the throttle collar, engages in one of the cut-outs in the position in which it is forced resiliently into the contact position of the throttle collar on the piston end face, and locks the adjusting shaft against rotation, wherein the cut-out (66) located in the locking position can be moved by longitudinal displacement of the adjusting shaft (38) against the resilient spring bias out of the engaged position of the projection (70) with the cut-out and the adjusting shaft is then rotatable in the through channel (42).

20. Damping device according to any one of claims 16 to 19, **characterised in that** the piston rod (28) is retained in the piston (14) so that it is longitudinally movable in a through opening (50') by a predetermined stroke, **in that** at least one overflow passage (51') is formed in the region of the through opening (50') through which the piston rod (28) passes, and **in that** the piston rod (28) is provided in the working chamber (26) through which it passes with a valve collar (54') in the shape of an annular disc which is adjustable during the longitudinal displacement of the piston rod (28) within the scope of the predetermined stroke between a position in which it rests on the associated piston end surface and thereby closes the overflow passage (51') and a position in which it is lifted off from the piston end face and frees the overflow passage (51').

21. Damping device according to claim 20, **characterised in that** the valve collar (54') is an integral part of the piston rod (28).

## Revendications

1. Dispositif d'amortissement (10) pour l'amortissement du mouvement de parties de meuble mobiles de pièces d'ameublement, comprenant un piston (14) logé dans un boîtier (12) de manière à se déplacer longitudinalement, lequel piston, en fonction de sa position de déplacement, forme sur des côtés opposés deux chambres de travail (24 ; 26) de taille variable et remplies d'un milieu d'amortissement fluide, lequel dispositif permet, par le biais d'au moins une liaison de trop-plein, un transfert étranglé du milieu d'amortissement entre les deux chambres de travail (24 ; 26), une tige de piston (28) étant raccordée sur un côté du piston (14), laquelle tige de piston saille de façon étanche hors de l'extrémité frontale associée du boîtier (12) et par l'extrémité extérieure opposée au piston de laquelle le mouvement de l'élément de meuble à amortir est transmis au piston (14),
**caractérisé**
**en ce qu'**une tige de réglage (38) allongée est raccordée sur le côté du piston (14) opposé à la chambre de travail (26) située côté tige de piston, laquelle tige de réglage présente un diamètre correspondant sensiblement au diamètre de la tige de piston (28) et son extrémité libre saille également de façon étanche hors du boîtier (12) par le côté frontal opposé au côté frontal fermé situé côté tige de piston,
**en ce que** l'extrémité de la tige de réglage (38) qui est raccordée au piston (14) s'insère dans un canal de passage (42) du piston (14) reliant les deux chambres de travail (24 ; 26), et est conçue de sorte qu'elle forme dans le canal de passage (42), à la suite d'un déplacement de réglage de la tige (38) par rapport au piston (14), une section d'étranglement de taille variable, et
**en ce que** la tige de réglage (38) et le canal de passage (42) en alignement avec celle-ci sont décalés latéralement dans le piston (14) et disposés parallèlement à l'axe longitudinal médian du boîtier.

2. Dispositif d'amortissement selon la revendication 1, **caractérisé en ce qu'**une section filetée (40) d'un diamètre supérieur au diamètre de la tige est prévue dans la zone d'extrémité située côté piston de la tige de réglage (38), laquelle section filetée s'insère dans une section du canal de passage (42) pourvue d'un filetage complémentaire, et **en ce qu'**il est prévu dans la section filetée (40) de la tige de réglage (38) au moins un creux (44) de type rainure lequel forme un passage depuis la chambre de travail (24) jusqu'au canal de passage (42).

3. Dispositif d'amortissement selon la revendication 2, **caractérisé en ce qu'**un tenon (46) se rétrécissant de manière conique en direction de son extrémité libre pénètre depuis la surface frontale, éloignée de la chambre de travail, de la section filetée (40) de la tige de réglage (38) dans une section du canal de passage (42) dont le diamètre est inférieur à celui de la section filetée (40).

4. Dispositif d'amortissement selon l'une des revendications 1 à 3, **caractérisé en ce qu'**une poignée (48) est prévue à l'extrémité libre de la tige de réglage (38).

5. Dispositif d'amortissement selon la revendication 4, **caractérisé en ce que** la poignée (48) est réalisée sous la forme d'un bouton rotatif de plus grand diamètre et dont la surface périphérique est pourvue de cannelures ou de moletages.

6. Dispositif d'amortissement selon l'une des revendications 1 à 5, **caractérisé en ce que** l'axe longitudinal médian de la tige de piston (28) est orienté en étant aligné avec l'axe longitudinal médian du boîtier (12).

7. Dispositif d'amortissement selon l'une des revendications 1 à 6, **caractérisé en ce que** le boîtier (12) et le piston (14) logé de manière à se déplacer longitudinalement à l'intérieur du boîtier présentent une section transversale ovale s'éloignant de la forme de section transversale circulaire ou est formée par deux délimitations rectilignes parallèles fermées à leurs extrémités par des arcs de cercle.

8. Dispositif d'amortissement selon la revendication 6 ou 7, **caractérisé en ce qu'**un deuxième canal de passage (50) reliant les deux chambres de travail (24 ; 26) est prévu dans une zone du piston (14) décalée, en référence à l'axe longitudinal médian du boîtier (12), par rapport à la zone du canal de passage (42) recevant la tige de réglage (38), de préférence une zone lui étant diamétralement opposée.

9. Dispositif d'amortissement selon la revendication 8, **caractérisé en ce qu'**une tige (52) est disposée dans le deuxième canal de passage (50), laquelle est retenue dans le piston (14) de manière à se déplacer longitudinalement d'une course prédéfinie, et dont la section transversale, au moins dans une zone partielle, est inférieure à la section transversale intérieure du deuxième canal de passage (50) afin de former un passage de trop-plein entre les chambres de travail (24 ; 26).

10. Dispositif d'amortissement selon la revendication 9, **caractérisé en ce qu'**un disque de soupape (54), dont la section transversale est plus importante au moins par endroits que la section transversale du deuxième canal de passage (50), est prévu à l'une des extrémités libres de la tige (52) retenue dans le deuxième canal de passage (50), lequel disque de soupape, dans le cas d'une pression accrue dans la chambre de travail (24) adjacente par rapport à celle régnant à l'extrémité libre de la deuxième chambre de travail (26) opposée, est pressé contre la surface frontale du piston (14) lui faisant face et ferme au moins en partie le passage de trop-plein entre le deuxième canal de passage (50) et la tige (52).

11. Dispositif d'amortissement selon la revendication 10, **caractérisé en ce que** l'extrémité de la tige (52) opposée à l'extrémité pourvue du disque de soupape (54) est traversée par une cheville (56) dont les extrémités libres opposées saillant de la tige s'insèrent dans des fentes (***56***/***58***) de type trou oblong situées dans le piston (14) et s'étendant dans la direction longitudinale de la tige.

12. Dispositif d'amortissement selon la revendication 10 ou 11, **caractérisé en ce que** le disque de soupape (54) est prévu à l'extrémité libre de la tige (52) retenue dans le deuxième canal de passage (50) et située dans la chambre de travail (24) traversée par la tige de réglage (38).

13. Dispositif d'amortissement selon l'une des revendications 1 à 7, **caractérisé en ce que** la tige de piston (28) est retenue dans une ouverture de passage (50') située dans le piston (14) en étant décalée du point de vue de son axe longitudinal médian latéralement par rapport à l'axe longitudinal médian de la tige de réglage (38), de sorte que son extrémité libre située à l'intérieur du boîtier pénètre encore dans la chambre de travail (24) associée sur toute l'étendue de la zone latérale adjacente de la surface avant du piston, **en ce qu'**un passage de trop-plein (51) est formé dans le piston (14) dans la zone de l'ouverture de passage (50') traversée par la tige de piston (28), et **en ce que** sur l'extrémité de la tige de piston (28) pénétrant dans la chambre de travail (24) associée, un disque de soupape (54) est retenu mobile entre une position reposant sur la surface frontale du piston et fermant le passage de trop-plein (51) et une position écartée de la surface frontale du piston et reliant le passage de trop-plein à la chambre de travail (24) adjacente.

14. Dispositif d'amortissement selon la revendication 13, **caractérisé en ce que** l'ouverture de passage (50') dans le piston (14) présente une section transversale circulaire qui correspond sensiblement au diamètre de la tige de piston (28) et qui présente dans une zone partielle un agrandissement de diamètre radial constituant, dans l'ouverture de passage, une rainure évidée continue formant le passage de trop-plein (51).

15. Dispositif d'amortissement selon la revendication 1, **caractérisé en ce que** la tige de piston (28) est décalée, du point de vue son axe longitudinal médian, latéralement par rapport à l'axe longitudinal médian de la tige de réglage (38) et est disposée dans une ouverture de passage (50') traversant le piston (14) de manière à se déplacer longitudinalement d'une course limitée, et au moins un passage de trop-plein (51') est formé dans l'ouverture de passage dans la zone traversée par la tige de piston (28), et **en ce que** la tige de piston (28) est pourvue, dans la zone de passage entre la chambre de travail (26) associée et l'ouverture de passage (50'), d'un collet de soupape (54') périphérique saillant radialement, lequel, dans le cadre de la course longitudinale de la tige de piston (28), est mobile entre une position reposant sur la surface frontale du piston et fermant le au moins un passage de trop-plein, et une position écartée de la surface du piston et mettant en contact le au moins un passage de trop-plein (51) et la deuxième chambre de travail (24).

16. Dispositif d'amortissement selon la revendication 1 ou 15, **caractérisé en ce que** la tige de réglage (38) peut être tournée et est disposée dans le canal de passage (42) du piston (14) reliant les chambres de travail (24, 26) de manière à se déplacer longitudinalement d'une course prédéfinie et est retenue précontrainte par ressort dans une position d'extrémité dans laquelle un collet d'étranglement (46') saillant radialement de la surface périphérique de la tige de réglage (38) dans la chambre de travail (24) située côté tige de réglage s'applique contre la surface frontale du piston, et **en ce que** le collet d'étranglement est pourvu d'un certain nombre d'évidements (66) décalés les uns des autres dans la direction périphérique et présentant des sections transversales de passage différentes, lesquels évidements peuvent être orientés, par rotation de la tige de réglage (38) dans le canal de passage (42), sélectivement avec un passage de trop-plein (42') prévu dans le piston (14) et reliant les chambres de travail (24, 26).

17. Dispositif d'amortissement selon la revendication ***18***/***16***, **caractérisé en ce que** le passage de trop-plein (42') est formé par un creux de type rainure traversant le piston (14) et prévu dans la paroi du canal de passage (42) présentant par ailleurs un diamètre dimensionné de façon complémentaire à celui de la tige de réglage (38).

18. Dispositif d'amortissement selon la revendication 16 et 17, **caractérisé en ce que** les évidements (66) débouchent ouverts dans le collet d'étranglement (46') dans sa surface périphérique et présentent des extensions radiales différentes.

19. Dispositif d'amortissement selon la revendication *17 et*/*16 à* 18, **caractérisé en ce qu'**une partie saillante (70), dont la largeur correspond aux évidements (66) dans le collet d'étranglement, s'aille depuis la surface frontale du piston (14) tournée vers le collet d'étranglement (46'), laquelle partie saillante, dans la position poussée par effet de ressort dans la position de butée du collet d'étranglement contre la surface frontale du piston, s'insère dans un des évidements et verrouille la tige de réglage en l'empêchant de tourner, l'évidement (66) situé dans la position de verrouillage pouvant être sorti de la position d'engrènement de la partie saillante (40) avec l'évidement à la suite d'un déplacement longitudinal de la tige de réglage (38) à l'encontre la précontrainte par ressort, et la tige de réglage (38) pouvant alors être tournée dans le canal de passage (42).

20. Dispositif d'amortissement selon l'une des revendications 16 à 19, **caractérisé en ce que** la tige de piston (28) est retenue dans une ouverture de passage (50') dans le piston (14) de manière à pouvoir être déplacée longitudinalement d'une course prédéfinie, **en ce qu'**au moins un passage de trop-plein (51') est formé dans la zone de l'ouverture de passage (50') traversée par la tige de piston (28), et **en ce que** la tige de piston (28) est pourvue dans la chambre de travail (26) traversée par cette dernière d'un collet de soupape (54') en forme de disque annulaire, lequel collet, lors du déplacement longitudinal de la tige de piston (28) dans le cadre de la course prédéfinie, peut être déplacé entre une position reposant sur la surface frontale associée du piston et fermant à cette occasion l'ouverture de passage (51'), et une position écartée de la surface frontale du piston et libérant le passage de trop-plein (51').

21. Dispositif d'amortissement selon la revendication 20, **caractérisé en ce que** le collet de soupape (54') fait partie intégrante de la tige de piston (28).
